# EUROPÄISCHE PATENTSCHRIFT

(11) **EP 3 775 978 B1**
(45) Veröffentlichungstag und Bekanntmachung des Hinweises auf die Patenterteilung: **01.11.2023**
(21) Anmeldenummer: 19714338.1
(22) Anmeldetag: 20.03.2019
(51) Int. Cl.: G01S 7/481, G01S 17/93

(54) **MAKROSKOPISCHE LIDAR-VORRICHTUNG**
MACROSCOPIC LIDAR DEVICE
DISPOSITIF LIDAR MACROSCOPIQUE

(30) Priorität: 28.03.2018 DE 102018204708
(43) Veröffentlichungstag der Anmeldung: 17.02.2021
(73) Patentinhaber: Robert Bosch GmbH, 70442 Stuttgart (DE)
(72) Erfinder: KAMIL, Mustafa, 71229 Leonberg (DE); HOLLECZEK, Annemarie, 4701-970 Braga (PT)
(86) Internationale Anmeldenummer: PCT/EP2019/056919
(87) Internationale Veröffentlichungsnummer: WO 2019/185412

(56) Entgegenhaltungen:
- WO-A1-2018/234070
- DE-A1- 19 530 281
- DE-A1- 19 757 848
- DE-C2- 19 530 281
- DE-C2- 19 757 848

## Beschreibung

Die Erfindung betrifft eine makroskopische Lidar-Vorrichtung. Die Erfindung betrifft ferner ein Verfahren zum Herstellen einer makroskopischen Lidar-Vorrichtung.

### Stand der Technik

Lidar-Makroscanner, bei dem alle optischen Elemente sowie der Laser und der Detektor auf einem Rotor angeordnet sind, und die einen rotierenden Makrospiegel mit einem Durchmesser im Zentimeterbereich aufweisen, sind bekannt. Dadurch kann im Sendepfad ein Strahl mit einem Durchmesser im Zentimeterbereich über den rotierenden Makrospiegel geführt werden. Vorteilhaft kann mit derartigen Systemen, in denen alle Komponenten "rotieren", ein horizontales Sichtfeld (engl. Field-of-View, FOV) von bis zu 360° systemimmanent abgescannt werden.

Dies stellt insbesondere beim Einbau in einer Fahrzeugkarosserie (d.h. nicht auf dem Fahrzeugdach) jedoch gleichzeitig einen Nachteil dar, da bis zu 2/3 der Zeit nicht gemessen werden kann, wenn nämlich der Laser auf dem Rotor in Richtung der Fahrzeugkarosserie zeigt. Zudem entstehen durch die Auswahl eines großen vertikalen Sichtfelds weitere Nachteile für das System, z.B. werden Systeme mit größerem Sichtfeld in der Regel höherbauender und kostenintensiver.

DE 197 57 848 A1 offenbart einen Aufbau eines drehbaren Laserscanners zum Einsatz in Fahrzeugen, der unter Einsatz von Spiegel einen Überwachungsraum scannt, wobei auch mehrere Sendeinrichtungen vertikal zueinander vorgesehen sein können. Offenbart ist, dass Planspiegel derart angeordnet und ausgerichtet sind, dass sie den Strahl in mehreren Ebenen mit nicht parallelen Abtastrichtungen verschwenken.

Auch DE 195 30 281 offenbart einen Aufbau eines für Fahrzeuge geeigneten drehbaren Laserscanners.

US 7 295 298 B2 offenbart einen Aufbau eines drehbaren Laserscanners, bei dem ebenfalls unter Einsatz von Spiegel ein Überwachungssektor vergrößert ist. Offenbart ist ein Verfahren zum Abtasten der Fahrzeugumgebung mit Hilfe mindestens einer optoelektronischen Vorrichtung, wobei über einen Spiegel die Strahlen umgelenkt werden, um das Sichtfeld des Sensors zu vergrößern.

US 5 808 728 offenbart ein System zur Überwachung der Fahrzeugumgebung über eine optische Radarvorrichtung, die Licht aussendet und empfängt, wobei innerhalb der Radarvorrichtung ein drehbarer Spiegel angebracht ist.

### Offenbarung der Erfindung

Eine Aufgabe der Erfindung ist es, ein verbessertes scannendes makroskopisches Lidar-System bereitzustellen.

Die Erfindung wird durch eine LIDAR-Vorrichtung nach Anspruch 1 definiert.

Auf diese Weise kann vorteilhaft eine bessere Ausnutzung des drehenden makroskopischen Lidar-Scanners erreicht werden, weil auch in der sogenannten "Dunkelphase" der Lidar-Vorrichtung ein Sichtfeld nach vorne ausgeleuchtet wird. Auf diese Weise kann vorteilhaft eine Verdopplung der Scan-Leistung der Lidar-Vorrichtung oder ein vergrößertes vertikales Sichtfeld bereitgestellt. Vorteilhaft ist dadurch die Lidar-Vorrichtung sehr gut für einen verdeckten Verbau im Chassis eines Fahrzeugs geeignet. Im Ergebnis weist die vorgeschlagene Lidar-Vorrichtung beim Scannen der Umgebung keine bzw. nur eine minimale Totzeit auf.

Bevorzugte Ausführungsformen der vorgeschlagenen Lidar-Vorrichtung sind Gegenstand von abhängigen Ansprüchen.

Die Erfindung wird im Folgenden mit weiteren Merkmalen und Vorteilen anhand von mehreren Figuren im Detail beschrieben. Gleiche oder funktionsgleiche Bauelemente haben dabei gleiche Bezugszeichen. Die Figuren sind insbesondere dazu gedacht, die erfindungswesentlichen Prinzipien zu verdeutlichen und sind nicht unbedingt maßstabsgetreu ausgeführt. Der besseren Übersichtlichkeit halber kann vorgesehen sein, dass nicht in sämtlichen Figuren sämtliche Bezugszeichen eingezeichnet sind.

Offenbarte Vorrichtungsmerkmale ergeben sich analog aus entsprechenden offenbarten Verfahrensmerkmalen und umgekehrt. Dies bedeutet insbesondere, dass sich Merkmale, technische Vorteile und Ausführungen betreffend die makroskopische Lidar-Vorrichtung in analoger Weise aus entsprechenden Ausführungen, Merkmalen und Vorteilen des Verfahrens zur Herstellung einer makroskopischen Lidar-Vorrichtung ergeben und umgekehrt.

In den Figuren zeigt:
- Fig. 1: eine prinzipielle Darstellung einer Draufsicht auf eine herkömmliche scannende makroskopische Lidar-Vorrichtung;
- Fig. 2: eine prinzipielle Darstellung mit einer Erläuterung der sogenannten Hellphase und Dunkelphase einer scannenden Lidar-Vorrichtung;
- Fig. 3: eine Darstellung einer Hellphase einer ersten Ausführungsform der vorgeschlagenen scannenden Lidar-Vorrichtung;
- Fig. 4: eine Darstellung einer Dunkelphase einer Ausführungsform der vorgeschlagenen scannenden Lidar-Vorrichtung;
- Fig. 5: eine Darstellung einer Hellphase einer zweiten Ausführungsform der vorgeschlagenen scannenden Lidar-Vorrichtung;
- Fig. 6: eine Darstellung einer Dunkelphase der zweiten Ausführungsform der vorgeschlagenen scannenden Lidar-Vorrichtung;
- Fig. 7: eine Darstellung einer Dunkelphase der zweiten Ausführungsform der vorgeschlagenen scannenden Lidar-Vorrichtung; und
- Fig. 8: eine prinzipielle Darstellung des Ablaufs einer Ausführungsform eines Verfahrens zum Herstellen einer makroskopischen Lidar-Vorrichtung.

### Beschreibung von Ausführungsformen

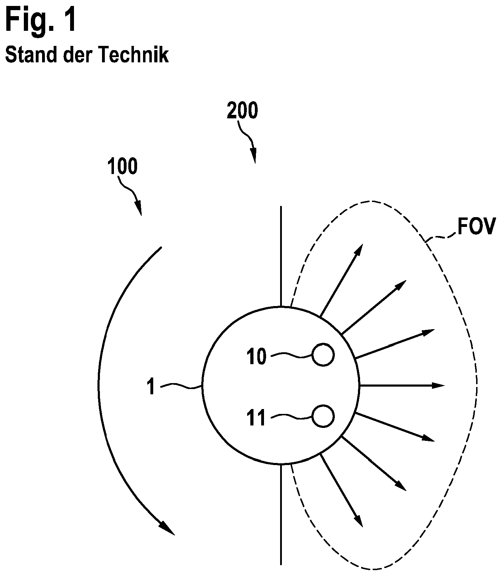

Fig. 1 zeigt einen eine schematische Draufsicht auf eine herkömmliche Lidar-Vorrichtung 100. Erkennbar ist ein Rotorelement 1, auf dem ein erstes Linsenelement 10 und ein zweites Linsenelement 11 angeordnet sind. Angedeutet ist ein Sichtfeld FOV, welches in einer bestimmungsgemäßen Anbringlage der Lidar-Vorrichtung 100 an einem Fahrzeug 200 nach vorne weist. Sendestrahlen eines Lasers sind durch Pfeile angedeutet. Ein Einbau der Lidar-Vorrichtung 100 im Fahrzeug 200 ist deshalb erwünscht, da die Lidar-Vorrichtung 100 möglichst unauffällig im Fahrzeug 200 integriert werden soll. Durch einen verdeckten Einbauort wird allerdings ein Sichtfeld FOV nicht mehr im Ausmaß von 360° nutzbar. Eine Reduzierung des Sichtfelds FOV geht aber für das beschriebene System immer mit einer Reduzierung der Messzeit einher, wenn sich der Teil des Rotorelements 1, das die Messung vornimmt, gerade außerhalb des Sichtfelds FOV befindet.

Ein Kerngedanke der vorliegenden Erfindung besteht insbesondere darin, ein effizienter betreibbares makroskopisches, scannendes Lidarsystem bereit zu stellen.

Dies wird dadurch erreicht, dass die Lidar-Vorrichtung 100 derart ausgebildet wird, dass während jeder Halbdrehung das Sichtfeld der Lidar-Vorrichtung 100 permanent nach vorne gerichtet ist. Dies wird durch nachfolgend näher erläuterte technische Mittel erreicht.

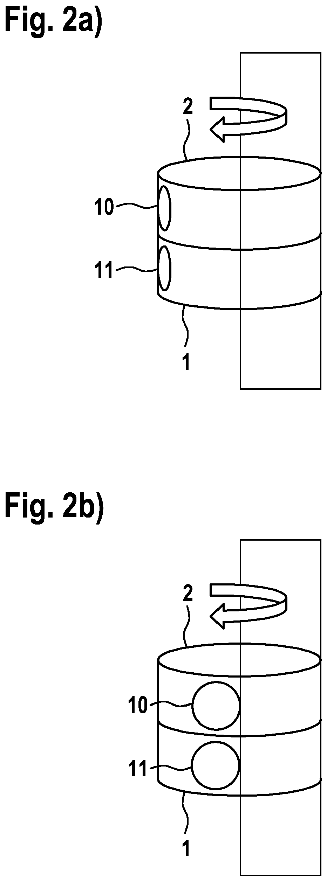

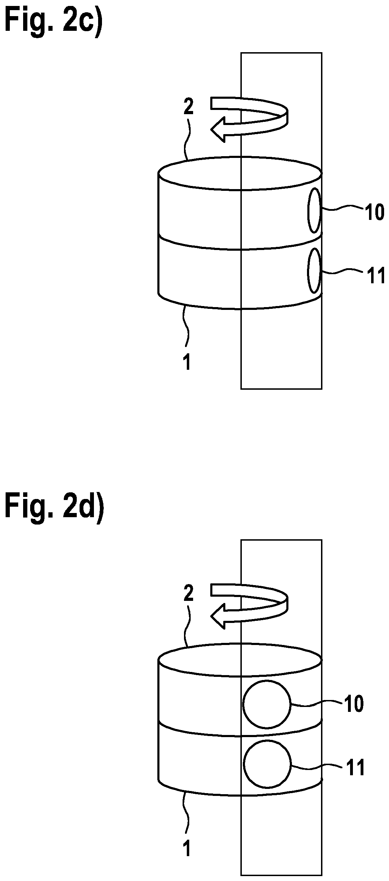

Fig. 2 zeigt eine Erläuterung der Hell- und Dunkelphase einer scannenden Lidar-Vorrichtung. Die Hellphase ist dadurch charakterisiert, dass Sende- und Empfangsoptiken (als kreisförmige Linsenelemente 10, 11 ausgebildet) eines auf einem Statorelement 1 angeordneten Rotorelements 2 der scannenden Lidar-Vorrichtung in Fahrtrichtung frei in die Fahrzeugumgebung schauen können. In der Dunkelphase schauen dieselben Elemente 10, 11 zur Fahrzeugkarosserie am Einbauort des Fahrzeugs und können daher nicht in die Umgebung schauen.

In Fig. 2a) ist erkennbar, dass eine Abschattung durch die Karosserie des Fahrzeugs nicht vorliegt, weil der Strahl (nicht dargestellt) nach vorne gerichtet ist. In Fig. 2b) der Hellphase erfolgt ein Übergang in eine Abschattung durch die Karosserie des Fahrzeugs. In der nunmehr beginnenden Dunkelphase, die in Fig. 2c) dargestellt ist, liegt eine Abschattung des Sendestrahls durch die Karosserie dadurch vor, dass der Sendestrahl nach hinten gerichtet ist. Schließlich ist in Fig. 2d) dargestellt, dass immer noch die Abschattung durch die Karosserie vorliegt, wobei nachfolgend der Drehzyklus des Rotorelements 2 wieder mit den Verhältnissen von Fig. 2a) in der Hellphase beginnt.

Eine Ausführungsform einer vorgeschlagenen Lidar-Vorrichtung 100 erfordert einen Einsatz von Umlenkoptiken (z.B. Umlenkspiegel), die entweder Teil integraler Teil der Lidar-Vorrichtung 100 sind oder auf dem Fahrzeug angeordnet sind.

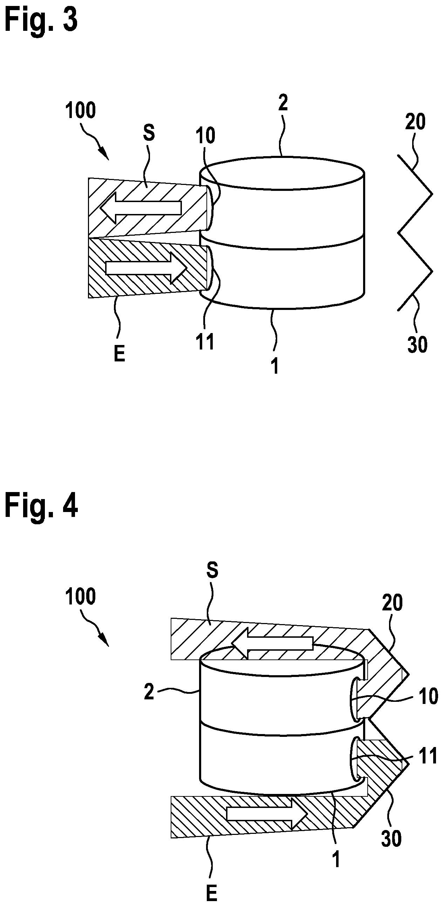

Die dadurch erreichte optische Wirkung bei der Ablenkung der Sende- und Empfangsstrahlen S, E in der Hell- und Dunkelphase ist in den Figuren 3 und 4 näher erläutert. Fig. 3 zeigt einen regulären Betrieb der Lidar-Vorrichtung 100 in der Hellphase. In der Dunkelphase können die umgelenkten Strahlen parallel zur Ebene der Strahlen in der Hellphase oder hiervon divergent abgelenkt werden. Dies geschieht je nach Einstellung der Umlenkeinrichtung 20, 30. Dabei ist eine erste Umlenkeinrichtung 20 vorgesehen, einen Sendestrahl S in der Dunkelphase umzulenken und über die Lidar-Vorrichtung hinweg nach vorne in das Sichtfeld zu führen. Eine zweite Umlenkeinrichtung 30 ist vorgesehen, einen unterhalb der Lidar-Vorrichtung ankommenden Empfangsstrahl E auf das Linsenelement 11 und in das Innere der Lidar-Vorrichtung 100 zu führen.

Sind die Umlenkeinrichtungen 20, 30 dreh- bzw. verstellbar gelagert, kann eine im Betrieb variable Funktion abgebildet werden, zum Beispiel je nach Fahrszenario (z.B. erfordert Urban Automated Driving ein Erkennen einer Gehwegkante im Nahfeld und damit ein sehr großes Sichtfeld). Die Umlenkeinrichtungen bzw. -optiken sind vorzugsweise als z.B. aluminiumbeschichtete Spiegelelemente ausgebildet, können aber auch als passive Prismen oder Axikone ausgestaltet sein. Die Umlenkeinrichtungen 20, 30 müssen radial-symmetrisch um die Rotationsachse des Sensors verlaufen, damit sie über die gesamte Dunkelphase hinweg die gewünschte optische Umlenkfunktion erfüllen.

Fig. 3 zeigt eine erste Ausführungsform der vorgeschlagenen makroskopischen Lidar-Vorrichtung 100 in der Hellphase. Man erkennt, dass der Sendestrahl S mittels eines ersten Linsenelements 10 nach vorne in die Umgebung geleitet wird, wobei mittels eines zweiten Linsenelements 11 der Empfangsstrahl E empfangen wird. Umlenkeinrichtungen 10, 20 sind vorzugsweise als halb-sphärische Spiegel ausgebildet, die halbkreisförmig im hinteren Bereich der Lidar-Vorrichtung 100 ausgebildet sind. Vorzugweise sind die Umlenkeinrichtungen 20, 30 integraler Teil der Lidar-Vorrichtung 100, es ist jedoch auch denkbar, die Umlenkeinrichtungen 20, 30 auf der Fahrzeugkarosserie anzuordnen.

In einer Dunkelphase der Lidar-Vorrichtung 100 wird, wie in Fig. 4 dargestellt, ein Umlenken des Sendestrahls S auf die erste Umlenkeinrichtung 20 durchgeführt, wodurch erreicht wird, dass der Sendestrahl S über die Lidar-Vorrichtung 100 hinweg nach vorne in die Umgebung geleitet wird. Analog dazu wird der Empfangsstrahl E auf die zweite Umlenkeinrichtung 30 durch das zweite Linsenelement 11 ins Innere der Lidar-Vorrichtung 100 geführt.

Aufgrund der Tatsache, dass die Spiegel der Umlenkeinrichtungen 20, 30 in einer Achse rechtwinklig zueinander angeordnet sind, sind der Sendestrahl S und der Empfangsstrahl E parallel zueinander ausgerichtet, wodurch in der Anordnung von Fig. 3 und 4 sowohl in der Hellphase als auch in der Dunkelphase identische Abtastcharakteristiken der Lidar-Vorrichtung 100 nach vorne in das Sichtfeld realisiert sind. Im Ergebnis kann dadurch eine Verdopplung der Abtast- bzw. Bildrate der Lidar-Vorrichtung 100 erreicht werden. Vorteilhaft ist dies mit einer kostengünstigen Ausgestaltung der Umlenkeinrichtungen 20, 30 als Spiegelelemente möglich.

Im Ergebnis ist dadurch erreicht, dass in jeder Halbdrehung des Rotorelements 2 der Strahl einer Sendeeinrichtung (nicht dargestellt) der Lidar-Vorrichtung 100 nach vorne abgestrahlt wird. Auf diese Weise kann im Ergebnis mit der makroskopischen Lidar-Vorrichtung 100 vorteilhaft eine höhere Bildrate erzielt werden, weil der scannende Strahl stets nach vorne gerichtet ist.

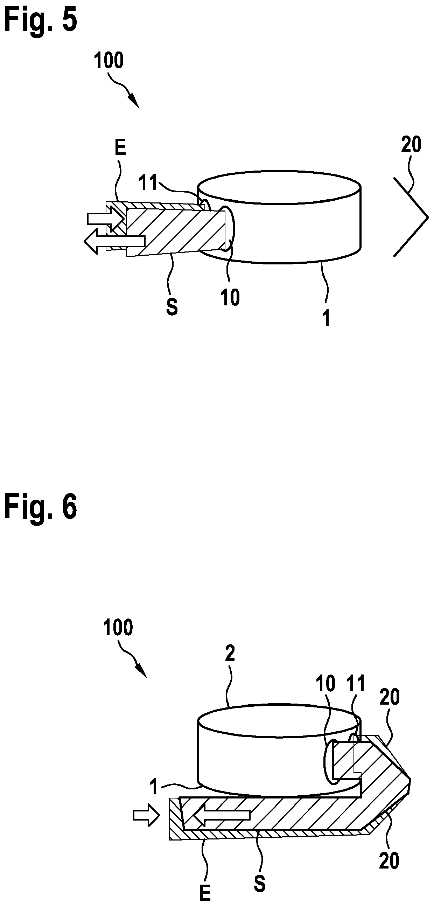

Fig. 5 zeigt eine weitere Ausführungsform der makroskopischen Lidar-Vorrichtung 100. Man erkennt, dass nunmehr die Linsenelemente 10, 11 des Sende- und Empfangspfads in einer Ebene angeordnet sind und seitlich zueinander versetzt am Rotorelement 2 angeordnet sind. In dieser Variante ist nur eine einzelne Umlenkeinrichtung 20 erforderlich, die vorzugsweise als halbsphärisch angeordnete, rechtwinklig zueinander ausgebildete Spiegelelemente ausgebildet sind. Dadurch ist ermöglicht, dass der Sende- und Empfangsstrahl S, E parallel zueinander ausgebildet sind, wodurch sowohl in der Hell- als auch in der Dunkelphase ein bis auf eine minimale, für die Umfeldabtastung durch die Lidar-Vorrichtung 100 nichtrelevante, laterale Verschiebung, identisches Sichtfeld vor der Lidar-Vorrichtung 100 ausgeleuchtet wird. Im Ergebnis ist auch in diesem Fall wieder eine erhöhte Bildwiederholrate möglich.

Fig. 6 zeigt die Lidar-Vorrichtung 100 von Fig. 5 in der Dunkelphase, wobei der Sendestrahl S durch das Linsenelement 10 definiert früher auf die erste Umlenkeinrichtung 20 trifft als der Empfangsstrahl E durch das Linsenelement 11. Der besseren Übersicht halber sind die Spiegelelemente der Umlenkeinrichtung 20 für den Sendepfad nicht um 90° zueinander angeordnet dargestellt, wobei es sich aber von selbst versteht, dass sowohl der Sendepfad als auch der Empfangspfad eine einzige Umlenkeinrichtung 20 nutzt, deren Spiegelelemente zueinander um 90° angeordnet sind.

Im Ergebnis kann ist dadurch nur eine einzige Umlenkeinrichtung 20 erforderlich, wodurch eine Bauform der Lidar-Vorrichtung 100 vorteilhaft niedriger ausgebildet sein kann als in der Variante der Figuren 3 und 4. Im Ergebnis ist für die Lidar-Vorrichtung 100 auch in diesem Fall ein biaxiales Konzept realisiert, bei dem Sende- und Empfangspfad voneinander getrennt voneinander ausgebildet sind. Eine hierzu analoge Ausführungsform mit einer koaxialen Anordnung von Sende- und Empfangspfad ist ebenso denkbar, auf die sich die genannten Vorteile übertragen lassen.

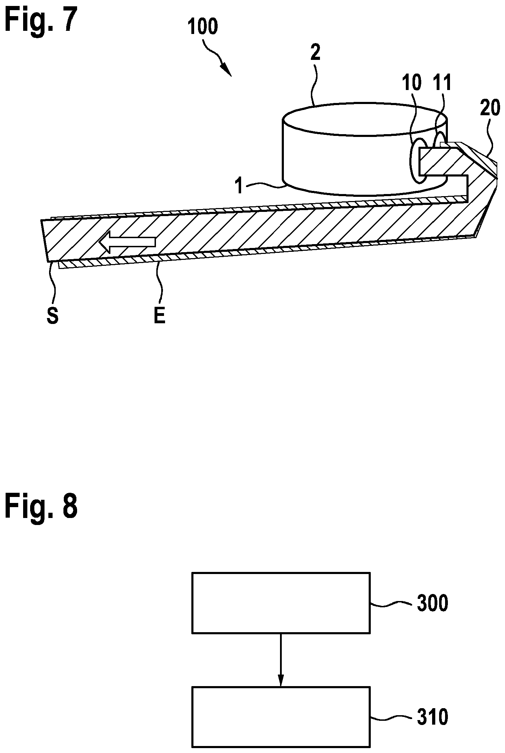

Fig. 7 zeigt eine weitere Ausführungsform der vorgeschlagenen Lidar-Vorrichtung 100 in der Dunkelphase. In diesem Fall weist die erste Umlenkeinrichtung 20 Spiegelelemente auf, die in einem Winkel größer als 90° zueinander angeordnet sind. Im Ergebnis wird dadurch in der Hellphase (nicht dargestellt) ein Sichtfeld ausgeleuchtet, das im Wesentlichen horizontal nach vorne ausgerichtet ist, wobei in der Dunkelphase aufgrund der genannten Verkippung der Spiegelelemente zueinander ein gegenüber der Hellphase vertikal verschwenktes Sichtfeld ausgeleuchtet wird. Im Ergebnis kann dadurch für die Lidar-Vorrichtung 100 mittels der Signalverarbeitung vorteilhaft ein vergrößertes vertikales Bildfeld realisiert werden.

Obwohl diese Variante in Fig. 7 mit Linsenelementen 10, 11 in einer Ebene dargestellt ist, versteht es sich von selbst, dass dieses Konzept auch für eine Variante der Lidar-Vorrichtung mit Linsenelementen in übereinander angeordneten Ebenen möglich ist (nicht dargestellt).

Zusammenfassend wird mit der vorliegenden Erfindung ein optischer Makroscanner vorgeschlagen, bei dem ein Laser und ein Detektor auf einer Plattform rotieren, wobei je nach Bauform alternativ eine erhöhte Bildrate oder ein vergrößertes vertikales Bildfeld realisiert wird, wenn der Makroscanner an einer Außenseite der Fahrzeugkarosserie eingebaut ist.

Vorteilhaft wird dem vorgeschlagenen Makroscanner ein zweiter Sende- und Empfangspfad hinzugefügt, wodurch das Sichtfeld durch zwei Strahlungspfade (anstatt eines einzelnen, wie im Stand der Technik) gescannt werden kann. Vorteilhaft ergibt sich dadurch keine Mess-Totzeit der makroskopischen Lidar-Vorrichtung, wodurch eine Erhöhung der Bildrate des Sensors bzw. eine Erhöhung des vertikalen Bildfeld bereitgestellt wird.

Vorteilhaft ist dies mittels einer passiven kostengünstigen Umlenkeinrichtung, z.B. in Form von aluminiumbeschichteten Spiegel möglich.

Obwohl sich bei diesem vorgeschlagenen Konzept das vertikale Bildfeld oder alternativ die Bildrate verdoppeln, verdoppelt sich dadurch vorteilhaft nicht eine Anzahl der verwendeten Elemente, wodurch eine kostengünstige Realisierung der vorgeschlagenen Lidar-Vorrichtung möglich ist. Dadurch bleibt im Ergebnis die Baugröße der Lidar-Vorrichtung im Wesentlichen erhalten bzw. wird deren Bauhöhe nur geringfügig erhöht. Durch Verwendung der Umlenkeinrichtung kann das System technologisch unverändert bleiben. Die ausgesandte Laserleistung kann zwischen der Vorderseite und der Rückseite des Sensors instantan, verlustfrei und passiv umgeschaltet werden.

Die vorgeschlagene Lidar-Vorrichtung kann in einer vorteilhaften Ausführungsform zusätzlich zu den oben erläuterten biaxialen Varianten auch als ein koaxiales System (mit identischem Sende- und Empfangspfad) ausgebildet werden.

Mit den oben erläuterten Varianten der vorgeschlagenen Lidar-Vorrichtung 100 ist es vorteilhaft ermöglicht, dass die gesamte Drehungszeit des Rotors der Lidar-Vorrichtung 100 als aktive Messzeit genutzt werden kann.

Fig. 8 zeigt einen prinzipiellen Ablauf einer Ausführungsform des vorgeschlagenen Verfahrens zum Herstellen einer Lidar-Vorrichtung 100.

In einem Schritt 300 wird ein Statorelement 1 bereitgestellt.

In einem Schritt 310 wird ein Bereitstellen eines auf dem Statorelement 1 angeordneten Rotorelements 2 mit einer Sendeinrichtung und einer Empfangseinrichtung durchgeführt, wobei das Rotorelement 2 derart ausgebildet wird, dass in bestimmungsgemäßer Anbringlage der Lidar-Vorrichtung 100 an einem Fahrzeug während jeder Halbdrehung des Rotorelements 2 ein Strahl der Sendeeinrichtung im Wesentlichen dauerhaft in ein nach vorne gerichtetes Sichtfeld FOV emittierbar ist und ein Empfangsstrahl E im Wesentlichen dauerhaft aus dem nach vorne gerichteten Sichtfeld FOV empfangbar ist.

Vorteilhaft ist die Reihenfolge der Schritte 300 und 310 beliebig.

## Patentansprüche

1. Lidar-Vorrichtung (100) aufweisend:
- ein Statorelement (1); und
- ein auf dem Statorelement (1) angeordnetes Rotorelement (2) mit einer Sendeeinrichtung und einer Empfangseinrichtung, wobei in bestimmungsgemäßer Anbringlage der Lidar-Vorrichtung (100) an einem Fahrzeug während jeder Halbdrehung des Rotorelements (2) ein Sendestrahl (S) der Sendeeinrichtung im Wesentlichen dauerhaft in ein nach vorne gerichtetes Sichtfeld (FOV) emittierbar und ein Empfangsstrahl (E) im Wesentlichen dauerhaft aus dem nach vorne gerichteten Sichtfeld (FOV) empfangbar ist, wobei der Sendestrahl (S) der Sendeeinrichtung und der Empfangsstrahl (E) während einer Phase, in der die Sendeeinrichtung dem Fahrzeug zugewandt ist, mittels einer Umlenkeinrichtung (10, 20) in das nach vorne gerichtete Sichtfeld (FOV) emittierbar und empfangbar sind, wobei die Umlenkeinrichtung (20) des Sende- und Empfangspfads zwei Spiegelelemente umfasst, die um größer oder kleiner als 90 Grad gegeneinander angeordnet sind und halbkreisförmig in einem dem Fahrzeug zugewandten Bereich der Lidar-Vorrichtung (100) angeordnet sind, wobei für den Sende- und Empfangspfad eine eigene Umlenkeinrichtung (10, 20) vorgesehen ist.

2. Lidar-Vorrichtung (100) nach einem der vorhergehenden Ansprüche, **dadurch gekennzeichnet, dass** die Umlenkeinrichtung (10, 20) an der Lidar-Vorrichtung (100) oder am Fahrzeug angeordnet ist.

3. Lidar-Vorrichtung (100) nach einem der vorhergehenden Ansprüche, **dadurch gekennzeichnet, dass** die Lidar-Vorrichtung (100) ausgebildet ist, eine räumliche Laserstrahlaufweitung über einen optischen Pfad entlang der Umlenkeinrichtung (10) innerhalb einer Dunkelphase durchzuführen.

## Claims

1. Lidar device (100) having:
- a stator element (1); and
- a rotor element (2), which is arranged on the stator element (1) and has a transmission instrument and a reception instrument, wherein in the correct intended installation position of the lidar device (100) on a vehicle, during each half revolution of the rotor element (2), a transmission beam (S) of the transmission instrument can be emitted substantially continuously into a forwardly directed field of view (FOV) and a reception beam (E) can be received substantially continuously from the forwardly directed field of view (FOV), wherein the transmission beam (S) of the transmission instrument and the reception beam (E) can be emitted and received in the forwardly directed field of view (FOV) by means of a deviation instrument (10, 20) during a phase in which the transmission instrument faces towards the vehicle, wherein the deviation instrument (20) of the transmission and reception path comprises two mirror elements which are arranged relative to one another by more or less than 90 degrees and are arranged semicircularly in a region of the lidar device (100) which faces toward the vehicle, wherein a separate deviation instrument (10, 20) is provided for the transmission and reception path.

2. Lidar device (100) according to one of the preceding claims, **characterized in that** the deviation instrument (10, 20) is arranged on the lidar device (100) or on the vehicle.

3. Lidar device (100) according to one of the preceding claims, **characterized in that** the lidar device (100) is configured to carry out spatial laser-beam broadening over an optical path along the deviation instrument (10) within a dark phase.

## Revendications

1. Dispositif Lidar (100) comportant :
- un élément formant stator (1) ; et
- un élément formant rotor (2) disposé sur l'élément formant stator (1) et comprenant un module d'émission et un module de réception, dans la position de montage prévue du dispositif Lidar (100) sur un véhicule, pendant chaque demi-rotation de l'élément formant rotor (2), un faisceau d'émission (S) du module d'émission pouvant être émis de manière sensiblement permanente dans un champ de vision (FOV) orienté vers l'avant et un faisceau de réception (E) pouvant être reçu de manière sensiblement permanente du champ de vision (FOV) orienté vers l'avant,
le faisceau d'émission (S) du module d'émission et le faisceau de réception (E) pouvant être émis et reçus dans le champ de vision (FOV) orienté vers l'avant au moyen d'un module de déviation (10, 20) pendant une phase dans laquelle le module d'émission est dirigé vers le véhicule, le module de déviation (20) du chemin d'émission et de réception comprenant deux éléments formant miroir qui sont disposés à des angles supérieurs ou inférieurs à 90 degrés l'un par rapport à l'autre et qui sont disposés en demi-cercle dans une zone du dispositif Lidar (100) dirigée vers le véhicule, un module de déviation séparé (10, 20) étant prévu pour les chemins d'émission et de réception.

2. Dispositif Lidar (100) selon l'une des revendications précédentes, **caractérisé en ce que** le module de déviation (10, 20) est disposé sur le dispositif Lidar (100) ou sur le véhicule.

3. Dispositif Lidar (100) selon l'une des revendications précédentes, **caractérisé en ce que** le dispositif Lidar (100) est conçu pour réaliser une expansion spatiale du faisceau laser sur un chemin optique le long du module de déviation (10) à l'intérieur d'une phase sombre.
